# EUROPÄISCHE PATENTANMELDUNG

(11) **EP 4 752 104 A1**
(43) Veröffentlichungstag der Anmeldung: **03.06.2026**
(21) Anmeldenummer: 24215677.6
(22) Anmeldetag: 27.11.2024
(51) Int. Cl.: C01B 3/50

(54) **VERFAHREN UND VORRICHTUNG ZUR ENTSORGUNG VON SCHADSTOFFEN BEI DER WASSERSTOFFERZEUGUNG**

(71) Anmelder: Linde GmbH, 82049 Pullach (DE)
(72) Erfinder: REINKE, Michael, 82049 Pullach (DE); HELFENBEIN, Sebastian, 82049 Pullach (DE); HENES, Marc-Dino, 82049 Pullach (DE); KLEIN, Bernd, 82049 Pullach (DE); MAIER, Alexander, 82049 Pullach (DE); STIGLMAYR, Ulrike, 82049 Pullach (DE); KOSSMANN, Andreas, 82049 Pullach (DE); LANG, Martin, 82049 Pullach (DE)
(74) Vertreter: Fischer, Werner

(57) **Zusammenfassung**

Die Erfindung betrifft ein Verfahren sowie eine Vorrichtung zur Erzeugung eines Wasserstoffprodukts, bei dem ein Wasserdampf sowie oxidierbare Schadstoffe enthaltendes Zwischenprodukt aus einem kohlenwasserstoffhaltigen Einsatzstoff gebildet und zum Wasserstoffprodukt aufbereitet wird, wobei Wasser zusammen mit oxidierbaren Schadstoffen aus dem Zwischenprodukt auskondensiert wird, um ein Prozesskondensat (1) zu erhalten, von dem in einem Deaerator (D) ein Wasserdampf sowie oxidierbare Schadstoffe enthaltendes Deaerator-Abgas (4) abgetrennt wird. Kennzeichnend hierbei ist, dass das Deaerator-Abgas (4) in eine Wasserfraktion (8) sowie eine gegenüber dem Deaerator-Abgas (4) an Wasserdampf abgereicherte und an oxidierbaren Schadstoffen angereicherte Gasfraktion (7) getrennt wird, die in den Feuerraum eines Prozessofens eingeleitet wird, um die oxidierbaren Schadstoffe zu verbrennen.

## Beschreibung

Die Erfindung betrifft ein Verfahren zur Erzeugung eines Wasserstoffprodukts, bei dem ein Wasserdampf sowie oxidierbare Schadstoffe enthaltendes Zwischenprodukt aus einem kohlenstoffhaltigen Einsatzstoff gebildet und zum Wasserstoffprodukt aufbereitet wird, wobei Wasser zusammen mit oxidierbaren Schadstoffen aus dem Zwischenprodukt auskondensiert wird, um ein Prozesskondensat zu erhalten, von dem in einem Deaerator ein Wasserdampf sowie oxidierbare Schadstoffe enthaltendes Deaerator-Abgas abgetrennt wird.

Weiterhin betrifft die Erfindung eine Vorrichtung zur Durchführung des Verfahrens.

Die Erzeugung von Wasserstoffprodukten wie Reinwasserstoff oder Oxogas aus kohlenstoffhaltigen Einsatzstoffen gehört seit vielen Jahren zum Stand der Technik. Dabei wird beispielsweise Erdgas zusammen mit Wasserdampf in einer Reformiereinrichtung zu einem Rohsynthesegas umgesetzt. Um die eingesetzten Kohlenwasserstoffe möglichst vollständig umzuwandeln und die Rußbildung zu unterdrücken, erfolgt die Reformierung mit einem Wasserdampfüberschuss, so dass das Rohsynthesegas neben Wasserstoff und Kohlenmonoxid auch einen erheblichen Wasseranteil aufweist. In weiteren Prozessschritten wird das Rohsynthesegas zum Wasserstoffprodukt aufbereitet, wobei Wasser entweder aus dem Rohsynthesegas oder aus einem Gasgemisch abgetrennt wird, das aus dem Rohsynthesegas beispielsweise durch eine Wassergas-Shift-Konvertierung entsteht. Zur Wasserabtrennung wird das zu behandelnde Gasgemisch bis unterhalb des Wasserdampftaupunktes abgekühlt, wodurch der Wasserdampf kondensiert, und ein sog. Prozesskondensat bildet, das zum überwiegenden Teil aus Wasser besteht und i.Allg. mit für die Umwelt schädlichen Stoffen wie beispielsweise Wasserstoff, Kohlenmonoxid, Methan, Methanol, Ethanol, Ameisensäure oder Essigsäure verunreinigt ist. Enthält der Einsatz Stickstoff, wie dies insbesondere bei Erdgas der Fall ist, das je nach Herkunft bis zu 20 mol% Stickstoff aufweist, gelangen auch Ammoniak sowie Amine in beträchtlichen Mengen in das Prozesskondensat.

Nach dem Stand der Technik wird das Prozesskondensat in eine dem Fachmann als Deaerator bekannte Entgasungseinrichtung eingeleitet. Der Deaerator ist als Strippkolonne ausgeführt, an deren Kopf das Prozesskondensat aufgegeben wird. Als Strippgas wird Niederdruck-Wasserdampf eingesetzt, der über den Deaerator-Sumpf unterhalb des ersten Stoffaustauschbodens bzw. der ersten Stoffaustauschpackung eingeleitet wird und von dort aus nach oben strömt, wobei weitere Stoffaustauschböden bzw. -packungen einen intensiven Kontakt mit dem im Gegenstrom geführten Prozesskondensat vermitteln. Das Strippgas nimmt dabei den überwiegenden Teil der im Prozesskondensat enthaltenen Schadstoffe auf und wird mit einem Wassergehalt von typischerweise mehr als 95mol-% als Deaerator-Abgas vom Kopf der Strippkolonne abgezogen. Während das Deaerator-Abgas entsorgt werden muss, wird aus dem gereinigten Prozesskondensat, das sich im Deaerator-Sumpf sammelt, durch Verdampfung und Überhitzung gegen abzukühlende Prozessströme Prozessdampf zur verfahrensinternen Nutzung erzeugt.

Liegen die Schadstoffkonzentrationen und -mengen im Deaerator-Abgas unterhalb der gesetzlichen Grenzwerte, kann es ohne weitere Behandlung in die Atmosphäre abgegeben werden. Überschreitet aber auch nur die Konzentration eines Schadstoffs einen gesetzlichen Grenzwert, so muss das Deaerator-Abgas vor der Freisetzung in die Atmosphäre in geeigneter Weise behandelt werden, um die emissionsrechtlichen Auflagen zu erfüllen.

Nach dem Stand der Technik werden die Deaerator-Abgase beispielsweise in einer Fackel unter Zuführung eines Brenngases verbrannt oder sie werden vollständig kondensiert und anschließend einer Entsorgung zugeführt. Alle diese Methoden sind aufwendig und kostenintensiv. In der DE102007059542A1 wird daher vorgeschlagen, das Deaerator-Abgas dem sauerstoffhaltigen Rauchgas eines Prozessofens zuzumischen, wo die Schadstoffe bei Temperaturen von mehr als 600°C verbrennen. Problematisch hierbei kann allerdings der hohe Wasseranteil des Deaerator-Abgases sein, durch dessen große Wärmekapazität das Rauchgas so weit abkühlt, dass die Schadstoffe nicht oder zumindest nicht vollständig zerstört werden.

Aufgabe der Erfindung ist es, ein Verfahren sowie eine Vorrichtung der gattungsgemäßen Art anzugeben, mit denen die beschriebenen Schwierigkeiten bei der Entsorgung des Deaerator-Abgases überwunden werden können.

Die gestellte Aufgabe wird verfahrensseitig erfindungsgemäß dadurch gelöst, dass das Deaerator-Abgas in eine Wasserfraktion sowie ein gegenüber dem Deaerator-Abgas an Wasserdampf abgereicherte und an oxidierbaren Schadstoffen angereicherte Gasfraktion getrennt wird, die in den Feuerraum eines Prozessofens eingeleitet wird, um die oxidierbaren Schadstoffe zu verbrennen.

Als Prozessöfen werden Dampfreformer und Öfen (Fired Heaters) angesehen, die über einen oder mehrere Brenner befeuert werden und zur Bereitstellung von Wärme dienen, die in dem erfindungsgemäßen Verfahren selbst oder in einem parallel zu diesem durchgeführten weiteren Verfahren benötigt wird. Die Feuerraumatmosphäre der Prozessöfen enthält freien Sauerstoff und hat eine Temperatur, die deutlich über 600°C liegt.

Sinnvollerweise wird das Deaerator-Abgas bis unter den Wassertaupunkt abgekühlt, um Wasser zu kondensieren und die oxidierbaren Schadstoffe in der verbleibenden Gasfraktion anzureichern. Die Abkühlung erfolgt dabei zweckmäßigerweise gegen Kühlwasser und/oder Luft. Möglich ist es auch, als Kühlmittel kaltes Prozesskondensat einzusetzen, das vor der Einleitung in den Deaerator angewärmt werden muss. Gewöhnlich wird zur Anwärmung des Prozesskondensats Prozess- bzw. Niederdruckdampf eingesetzt, worauf durch die vorgeschlagene Verfahrensvariante ganz oder zumindest teilweise verzichtet werden kann.

Das zweiphasige, bei der Abkühlung entstehende Stoffgemisch kann zur Trennung von flüssigem Wasser und Gasphase beispielsweise in einen Abscheider oder eine Strippkolonne (Abgaskondensatstripper) eingeleitet werden. Die so erhaltene Gasfraktion, die den weit überwiegenden Teil der im Deaerator-Abgas vorliegenden Schadstoffe enthält, bewirkt aufgrund ihres sehr geringen Wassergehalts bei ihrer Einleitung in den Feuerraum des Prozessofens allenfalls eine unwesentliche Abkühlung der Feuerraumatmosphäre. Da Prozessöfen mit Feuerraumtemperaturen von deutlich über 600°C und Sauerstoffüberschuss betrieben werden, verbrennen die oxidierbaren Schadstoffe vollständig.

Sowohl im Abscheider als auch im Abgaskondensatstripper wird aus dem zweiphasigen Stoffgemisch keine vollständig von Schadstoffen freie Wasserfraktion gewonnen. Vielmehr ist zumindest die Schadstoffkonzentration der im Abscheider erhaltenen Wasserfraktion so hoch, dass sie weder - etwa zur Prozessdampferzeugung - stofflich genutzt noch in die Umwelt abgeleitet werden kann, ohne eine weitere Aufbereitung zu durchlaufen. Eine zweckmäßige Variante des erfindungsgemäßen Verfahrens sieht vor, den ohnehin vorhandenen Deaerator zur Aufbereitung zu nutzen, dem die Wasserfraktion oberhalb des untersten Stoffaustauschbodens und vorzugsweise am Kopf aufgegeben wird, um gemeinsam mit Prozesskondensat von Schadstoffen gereinigt zu werden.

Durch Strippung im Abgaskondensatstripper, bei der bevorzugt Niederdruckdampf als Strippgas eingesetzt wird, kann die Schadstoffkonzentration der Wasserfraktion weiter abgesenkt werden als durch bloße Abscheidung. Insbesondere ist es möglich, aus dem zweiphasigen Stoffgemisch eine Wasserfraktion zu erhalten, die aufgrund ihres geringen Schadstoffgehalts ohne weitere Aufbereitung zur Produktion von Prozessdampf geeignet ist. Zweckmäßigerweise wird eine derart erhaltene Wassersfraktion aus dem Sumpf des Abgaskondensatstrippers direkt in den Deaerator-Sumpf überführt und dem sich dort sammelnden Prozesskondensat zugemischt.

Durch die erfindungsgemäße Rückführung von im Deaerator-Abgas enthaltenem Wasser ergeben sich bei der Erzeugung des Wasserstoffprodukts wirtschaftliche Vorteile gegenüber dem Stand der Technik, da weniger Frischwasser zu- und eine geringere Abwassermenge abgeführt werden muss.

Insbesondere dann, wenn die Aufbereitung des Rohsynthesegases zum Wasserstoffprodukt eine Niedertemperatur-CO-Konvertierung umfasst, kann das Prozesskondensat auch Methylamine (Mono-, Di- und Trimethylamin) enthalten, die bei der Konvertierung aus den Nebenprodukten Ammoniak und Methanol gebildet werden. Diese giftigen Stoffe, die bereits in geringsten Konzentrationen zu starken Geruchsbelästigungen führen, gelangen wegen ihrer sehr guten Wasserlöslichkeit in die aus dem Deaerator-Abgas abgetrennte Wasserfraktion, mit der sie in den Deaerator zurückgeführt werden und so im Prozess verbleiben.

Weiterhin betrifft die Erfindung eine Vorrichtung zur Erzeugung eines Wasserstoffprodukts, mit einer Reformier- und einer Aufbereitungseinrichtung, über die ein Wasserdampf sowie oxidierbare Schadstoffe enthaltendes Zwischenprodukt aus einem kohlenstoffhaltigen Einsatzstoff gebildet und unter Erhalt eines Wasser und oxidierbare Schadstoffe umfassenden Prozesskondensats zum Wasserstoffprodukt aufbereitet werden kann, sowie einem Deaerator zur Entgasung des Prozesskondensats, bei der ein Wasserdampf sowie oxidierbare Schadstoffe enthaltendes Deaerator-Abgas anfällt.

Die gestellte Aufgabe wird vorrichtungsseitig erfindungsgemäß dadurch gelöst, dass eine mit dem Feuerraum eines Prozessofen verbundene Trenneinrichtung umfasst ist, mit der das Deaerator-Abgas in eine Wasserfraktion sowie eine gegenüber dem Deaerator-Abgas an Wasserdampf abgereicherte und an oxidierbaren Schadstoffen angereicherte Gasfraktion zur Einleitung in den Feuerraum des Prozessofens getrennt werden kann.

Vorzugsweise weist die Trenneinrichtung einen Wärmeübertrager auf, in dem das Deaerator-Abgas bis unter den Wassertaupunkt abgekühlt werden kann, um Wasser zu kondensieren und ein zweiphasiges Stoffgemisch zu erzeugen.

In einer Variante der erfindungsgemäßen Vorrichtung umfasst die Trenneinrichtung einen stromabwärts des Wärmetauscheres angeordneten Abscheider, in dem das im Wärmetauscher erhältliche zweiphasige Stoffgemisch in die Wasserfraktion sowie die gegenüber dem Deaerator-Abgas an Wasserdampf abgereicherte und an oxidierbaren Schadstoffen angereicherte Gasfraktion getrennt werden kann. Der Abscheider kann entweder als eigenständiger Apparat ausgeführt oder kopfseitig in den Deaerator integriert sein.

In einer anderen Variante der erfindungsgemäßen Vorrichtung weist die Trenneinrichtung einen stromabwärts des Wärmeübertrager angeordneten Abgaskondensatstripper auf, in der das im Wärmetauscher erhältliche zweiphasige Stoffgemisch durch Strippung in die Wasserfraktion sowie die gegenüber dem Abgas an Wasserdampf angereicherte und an oxidierbaren Schadstoffen angereicherte Gasfraktion getrennt werden kann.

Eine bevorzugte Ausgestaltung der erfindungsgemäßen Vorrichtung umfasst eine Verbindungsleitung zwischen der Trenneinrichtung und dem Deaerator, über die die in der Trenneinrichtung erhältliche Wasserfraktion dem Kopf oder dem Sumpf des Deaerators zugeführt werden kann.

Sinnvollerweise ist die Trenneinrichtung oberhalb des Deaerators angeordnet, so dass die im Abscheider oder dem Abgaskondensatstripper erhältliche Wasserfraktion mit Hilfe der Schwerkraft über die Verbindungsleitung in den Deaerator überführt werden kann.

Die Reformiereinrichtung der erfindungsgemäßen Vorrichtung umfasst vorzugsweise einen brennerbefeuerten oder elektrisch direkt oder indirekt beheizbaren Dampfreformer (SMR), einen Autothermalreformer (ATR), einen Partialoxidations-Reaktor (POX) oder eine Kombination von wenigstens zwei dieser Einrichtungen, wobei dem elektrisch beheizbaren SMR, dem ATR sowie dem POX ein Fired Heater zur Anwärmung eines Einsatzstoffes und/oder zur Überhitzung von Sattdampf zugeordnet sein kann.

Der Prozessofen, in dessen Feuerraum die an Wasserdampf abgereicherte und an oxidierbaren Schadstoffen angereicherte Gasfraktion einleitbar ist, kann zu einer Einrichtung außerhalb der erfindungsgemäßen Vorrichtung gehören. Vorzugsweise ist der Prozessofen aber Teil der erfindungsgemäßen Vorrichtung. Insbesondere handelt es sich bei dem Prozessofen um einen brennerbefeuerten Dampfreformer oder um einen Fired Heater oder Auxiliary Boiler (Hilfs-Dampferzeuger), der einem elektrisch beheizbaren SMR, einem ATR oder einem POX der Reformiereinrichtung zugeordnet ist.

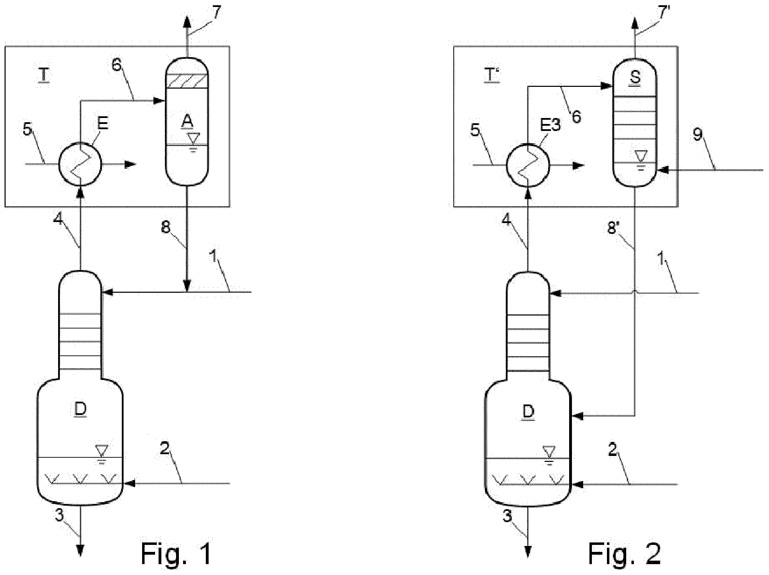

Im Folgenden soll die Erfindung anhand zweier, in der **Figur 1** und **2** schematisch dargestellter Ausführungsbeispiele näher erläutert werden.

Die Figuren, in denen gleiche Anlagenteile und Verfahrensströme mit den gleichen Bezugszeichen markiert sind, zeigen Ausschnitte eines Verfahrens, bei dem ein Wasserdampf sowie oxidierbare Schadstoffe enthaltendes Zwischenprodukt aus einem kohlenwasserstoffhaltigen Einsatzstoff gebildet und einem Wasserstoffprodukt aufbereitet wird. Das hierbei anfallenden, oxidierbare Schadstoffe wie Wasserstoff, Kohlenmonoxid, Methan, Methanol, Ethanol, Ammoniak, Amine, Ameisen- oder Essigsäure enthaltendes Prozesskondensat wird in der Verfahrensvariante der Figur 1 mit Hilfe eines Abscheiders und in derjenigen der Figur 2 unter Einsatz einer Strippkolonne behandelt.

Zur Abtrennung von Schadstoffen wird das überwiegend aus Wasser bestehende Prozesskondensat 1 am Kopf des Deaerators D aufgegeben, von wo es über Stoffaustauschböden nach unten strömt und dabei in intensiven Kontakt mit über den Deaeratorsumpf zugeführten Strippdampf 2 gebracht wird, der einen Großteil der Schadstoffe aufnimmt. Während sich das gereinigte Prozesskondensat sich im Deaeratorsumpf sammelt und über Leitung 3 einem Prozessdampferzeuger zugeführt wird (nicht dargestellt), werden die abgetrennten oxidierbaren Schadstoffe mit dem bis zu 95mol-% aus Wasser bestehenden Deaerator-Abgas 4 vom Kopf des Deaerators D abgezogen und im Wärmeübertrager E der Trenneinrichtung T gegen ein Kühlmittel 5 bis unter den Wassertaupunkt abgekühlt.

Die Trenneinrichtung T der Figur 1 umfasst einen Abscheider A, in dem das zweiphasige, im Wärmeübertrager E erhaltene Stoffgemisch 6 in eine Schadstoffe enthaltende Wasserfraktion 8 sowie eine gegenüber dem Deaerator-Abgas 4 an Wasserdampf abgereicherte und an oxidierbaren Schadstoffen angereicherte Gasfraktion 7 getrennt wird. Zur weiteren Reduzierung des Schadstoffgehalts wird die Wasserfraktion 8 mit dem Prozesskondensat 1 zusammengeführt und am Kopf des Deaerators D aufgegeben. Die an oxidierbaren Schadstoffen angereicherte Gasfraktion 7 kann aufgrund ihres geringen Wassergehalts in den Feuerraum eines Prozessofens (nicht dargestellt) eingeführt werden, wo die Schadstoffe bei Temperaturen von mehr als 600°C sicher verbrennen.

Die Trenneinrichtung T' der Figur 2 umfasst statt eines Abscheiders eine Strippkolonne S, in der mit Hilfe von Strippgas 9 das zweiphasige, im Wärmeübertrager E erhaltene Stoffgemisch 6 getrennt wird. Während die am Kopf der Strippkolonne S erhaltene, an oxidierbaren Schadstoffen angereicherte Gasfraktion 7' in den Feuerraum eines Prozessofens (nicht dargestellt) eingeleitet wird, kann die Wasserfraktion 8' direkt dem Sumpf des Deaerators D zugeführt, da sie mit einem Schadstoffgehalt erhältlich ist, der deutlich unter dem der Wasserfraktion 8 liegt.

## Patentansprüche

1. Verfahren zur Erzeugung eines Wasserstoffprodukts, bei dem ein Wasserdampf sowie oxidierbare Schadstoffe enthaltendes Zwischenprodukt aus einem kohlenwasserstoffhaltigen Einsatzstoff gebildet und zum Wasserstoffprodukt aufbereitet wird, wobei Wasser zusammen mit oxidierbaren Schadstoffen aus dem Zwischenprodukt auskondensiert wird, um ein Prozesskondensat (1) zu erhalten, von dem in einem Deaerator (D) ein Wasserdampf sowie oxidierbare Schadstoffe enthaltendes Deaerator-Abgas (4) abgetrennt wird, **dadurch gekennzeichnet, dass** das Deaerator-Abgas (4) in eine Wasserfraktion (8, 8') sowie eine gegenüber dem Deaerator-Abgas (4) an Wasserdampf abgereicherte und an oxidierbaren Schadstoffen angereicherte Gasfraktion (7, 7') getrennt wird, die in den Feuerraum eines Prozessofens eingeleitet wird, um die oxidierbaren Schadstoffe zu verbrennen.

2. Verfahren nach Anspruch 1, **dadurch gekennzeichnet, dass** das Deaerator-Abgas (4) bis unter den Wassertaupunkt abgekühlt wird, um ein zweiphasiges Stoffgemisch (6) zu erhalten, das in einem Abscheider (A) in die Wasserfraktion (8) sowie die gegenüber dem Deaerator-Abgas (4) an Wasserdampf abgereicherte und an oxidierbaren Schadstoffen angereicherte Gasfraktion (7) getrennt wird.

3. Verfahren nach Anspruch 2, **dadurch gekennzeichnet, dass** die im Abscheider (A) erhaltene Wasserfraktion (8) zurückgeführt und am Kopf des Deaerators (D) aufgegeben wird.

4. Verfahren nach Anspruch 1, **dadurch gekennzeichnet, dass** das Deaerator-Abgas (4) bis unter den Wassertaupunkt abgekühlt wird, um ein zweiphasiges Stoffgemisch (6) zu erhalten, das einer Strippkolonne (S) zugeführt wird, wo es durch Strippung mit Dampf (9) in die Wasserfraktion (8`) sowie die gegenüber dem Deaerator-Abgas (4) an Wasserdampf abgereicherte und an oxidierbaren Schadstoffen angereicherte Gasfraktion (7') getrennt wird.

5. Verfahren nach Anspruch 4, **dadurch gekennzeichnet, dass** die durch Strippung erhaltene Wasserfraktion (8`) zurückgeführt und in den Sumpf des Deaerators (D) eingeleitet wird.

6. Verfahren nach einem der Ansprüche 1 bis 5, **dadurch gekennzeichnet, dass** der kohlenwasserstoffhaltige Einsatzstoff zur Bildung des Wasserdampf sowie oxidierbare Schadstoffe enthaltenden Zwischenprodukts einer Autothermalreformierung oder einer Dampfreformierung oder einer Partialoxidation oder einer Kombination aus wenigstens zwei dieser Verfahren unterzogen wird.

7. Verfahren nach einem der Ansprüche 1 bis 6, **dadurch gekennzeichnet, dass** der Prozessofen dazu eingesetzt wird, um im Verfahren benötigte Wärme zu erzeugen.

8. Vorrichtung zur Erzeugung eines Wasserstoffprodukts, mit einer Reformier- und einer Aufbereitungseinrichtung, über die ein Wasserdampf sowie oxidierbare Schadstoffe enthaltendes Zwischenprodukt aus einem kohlenwasserstoffhaltigen Einsatzstoff gebildet und unter Erhalt eines Wasser und oxidierbare Schadstoffe umfassenden Prozesskondensats (1) zum Wasserstoffprodukt aufbereitet werden kann, sowie einem Deaerator (D zur Entgasung des Prozesskondensats (1), bei der ein Wasserdampf sowie oxidierbare Schadstoffe enthaltendes Deaerator-Abgas (4) anfällt, **dadurch gekennzeichnet, dass** sie eine mit dem Feuerraum eines Prozessofen verbundene Trenneinrichtung (T, T') umfasst, mit der das Deaerator-Abgas (4) in eine Wasserfraktion (8, 8') sowie eine gegenüber dem Deaerator-Abgas (4) an Wasserdampf abgereicherte und an oxidierbaren Schadstoffen angereicherte Gasfraktion (7, 7') zur Einleitung in den Feuerraum des Prozessofens getrennt werden kann.

9. Vorrichtung nach Anspruch 8, **dadurch gekennzeichnet, dass** die Trenneinrichtung (T) einen Wärmeübertrager (E) umfasst, in dem das Deaerator-Abgas (4) bis unter den Wassertaupunkt abgekühlt werden kann, um Wasser auszukondensieren und ein zweiphasiges Stoffgemisch (6) zu erzeugen.

10. Vorrichtung nach Anspruch 8, **dadurch gekennzeichnet, dass** sie einen Abscheider (A) aufweist, in dem das im Wärmeübertrager (E) der Trenneinrichtung (T) erhältliche zweiphasige Stoffgemisch (6) in die Wasserfraktion (8) sowie die gegenüber dem Deaerator-Abgas (4) an Wasserdampf abgereicherte und an oxidierbaren Schadstoffen angereicherte Gasfraktion (7) getrennt werden kann.

11. Vorrichtung nach Anspruch 8, **dadurch gekennzeichnet, dass** sie eine Strippkolonne (S) aufweist, in der das im Wärmeübertrager (E) der Trenneinrichtung (T) erhältliche zweiphasige Stoffgemisch (6) durch Strippung in die Wasserfraktion (8') sowie die gegenüber dem Dearerator-Abgas (4) an Wasserdampf abgereicherte und an oxidierbaren Schadstoffen angereicherte Gasfraktion (7`) getrennt werden kann.

12. Vorrichtung nach einem der Ansprüche 8 bis 11, **dadurch gekennzeichnet, dass** die Trenneinrichtung (T) so mit dem Deaerator (D) verbunden ist, dass die in der Trenneinrichtung (T) erhältliche Wasserfraktion (8, 8') dem Deaerator (D) an seinem über Kopf oder den Sumpf zugeführt werden kann.

13. Vorrichtung nach einem der Ansprüche 8 bis 12, **dadurch gekennzeichnet, dass** die Reformiereinrichtung einen Dampfreformer oder einen Autothermalreformer oder einen Partialoxidations-Reaktor oder eine Kombination von wenigstens zwei dieser Einrichtungen umfasst.

14. Vorrichtung nach einem der Ansprüche 8 bis 13, **dadurch gekennzeichnet, dass** sie den Prozessofen umfasst.
